# EUROPEAN PATENT APPLICATION

(11) **EP 4 844 898 A1**
(43) Date of publication of application: **25.11.2026**
(21) Application number: 26174029.4
(22) Date of filing: 22.04.2026
(51) Int. Cl.: H01M 50/105, H01M 50/178

(54) **BATTERY CELL**

(30) Priority: 19.05.2025 JP 2025083376
(71) Applicant: Toyota Jidosha Kabushiki Kaisha, Toyota-shi, Aichi-ken 471-8571 (JP)
(72) Inventor: ISHIZUKA, Masahiro, Toyota-shi, Aichi-ken 471-8571 (JP); SUGIHARA, Atsushi, Toyota-shi, Aichi-ken 471-8571 (JP); NAKASHIMA, Satoshi, Toyota-shi, Aichi-ken 471-8571 (JP); ONO, Masato, Toyota-shi, Aichi-ken 471-8571 (JP); HAGA, Masayoshi, Toyota-shi, Aichi-ken 471-8571 (JP); IZUMI, Jun, Toyota-shi, Aichi-ken 471-8571 (JP); MIYAHARA, Kenta, Toyota-shi, Aichi-ken 471-8571 (JP)
(74) Representative: D Young & Co LLP

(57) **Abstract**

A battery cell (10) includes a power storage element (20), an outer case (30) housing the power storage element (20) and having stacked first and second film portions (34a, 36a), and an electrode plate (50; 60) extending from an inner side to an outer side of the outer case (30) through an interface between the first and second film portions (34a, 36a). A fused portion (70) having a linear shape and crossing the electrode plate (50; 60) is provided in a stacked portion (38) of the first and second film portions (34a, 36a). The first and second film portions (34a, 36a) are fused to the electrode plate (50; 60) at the fused portion (70) in a region in which the fused portion (70) overlaps the electrode plate (50, 60). The first and second film portions (34a, 36a) are fused to each other at the fused portion (70) in a region in which the fused portion (70) does not overlap the electrode plate (50; 60). An outer peripheral edge (50a; 60a) of the electrode plate (50; 60) obliquely intersects the fused portion (70).

## Description

### BACKGROUND OF THE INVENTION

### 1. Field of the Invention

The disclosure relates to a battery cell.

### 2. Description of Related Art

In the battery cell described in Japanese Unexamined Patent Application Publication No. 2020-068197 (JP 2020-068197 A), an outer case is formed of a film that encloses a power storage element. A stacked portion in which films are stacked on each other is provided around the power storage element. A fused portion in which the films are fused to each other is provided at the stacked portion. The fused portion is linearly provided along the stacked portion. The outer case is sealed by the films being fused to each other at the fused portion. The battery cell includes electrode plates connected to the power storage element. Each electrode plate is led from the inner side of the outer case to the outer side of the outer case through the interface between the films in the stacked portion. In the region where the electrode plate is present in the fused portion, the films are fused to the electrode plate.

### SUMMARY OF THE INVENTION

As described above, in the fused portion, the films are fused to the electrode plate at a location where the electrode plate is present, and the films are fused to each other at a location where the electrode plate is absent. For this reason, at the outer peripheral edge of each of the electrode plates, the films are displaced in the thickness direction of the electrode plate, so it is difficult to adhere the films to the electrode plate. As a result, the sealing performance of the outer case tends to deteriorate at the outer peripheral edge of the electrode plate. The disclosure suggests a technology to improve the sealing performance at the outer peripheral edge of an electrode plate.

An aspect of the disclosure relates to a battery cell. The battery cell includes a power storage element, an outer case housing the power storage element and having a first film portion and a second film portion stacked on the first film portion, and an electrode plate connected to the power storage element and extending from an inner side of the outer case to an outer side of the outer case through an interface between the first film portion and the second film portion. A fused portion having a linear shape and crossing the electrode plate is provided in the stacked portion of the first film portion and the second film portion. The first film portion and the second film portion are fused to the electrode plate at the fused portion in a region in which the fused portion overlaps the electrode plate. The first film portion and the second film portion are fused to each other at the fused portion in a region in which the fused portion does not overlap the electrode plate. An outer peripheral edge of the electrode plate obliquely intersects the fused portion when viewed along a stacking direction of the first film portion and the second film portion.

In this battery cell, the outer peripheral edge of the electrode plate obliquely intersects the fused portion. As a result, the length of a part of the outer peripheral edge of the electrode plate, fused to the film, is long. Therefore, it is possible to improve the sealing performance at the outer peripheral edge of the electrode plate.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a battery cell of an embodiment;
FIG. 2 is a plan view of the battery cell of the embodiment when viewed along the thickness direction (that is, the stacking direction of a film in a stacked portion);
FIG. 3 is a cross-sectional view of the battery cell in a state before an outer case is sealed (that is, an open state);
FIG. 4 is a cross-sectional view of a fused portion in a region in which an electrode plate is present and a region in which an electrode plate is absent (that is, a cross-sectional view taken along the line IV in FIG. 2); and
FIG. 5 is a plan view of a battery cell of a modification when viewed along the thickness direction.

### DETAILED DESCRIPTION OF EMBODIMENTS

In a battery cell according to an example of disclosure, the width of an electrode plate on an outer side of an outer case may be shorter than the width of the electrode plate on an inner side of the outer case.

With this configuration, the battery cell can be reduced in size.

In a battery cell according to an example of the disclosure, the width of an electrode plate on an outer side of an outer case may be longer than the width of the electrode plate on an inner side of the outer case.

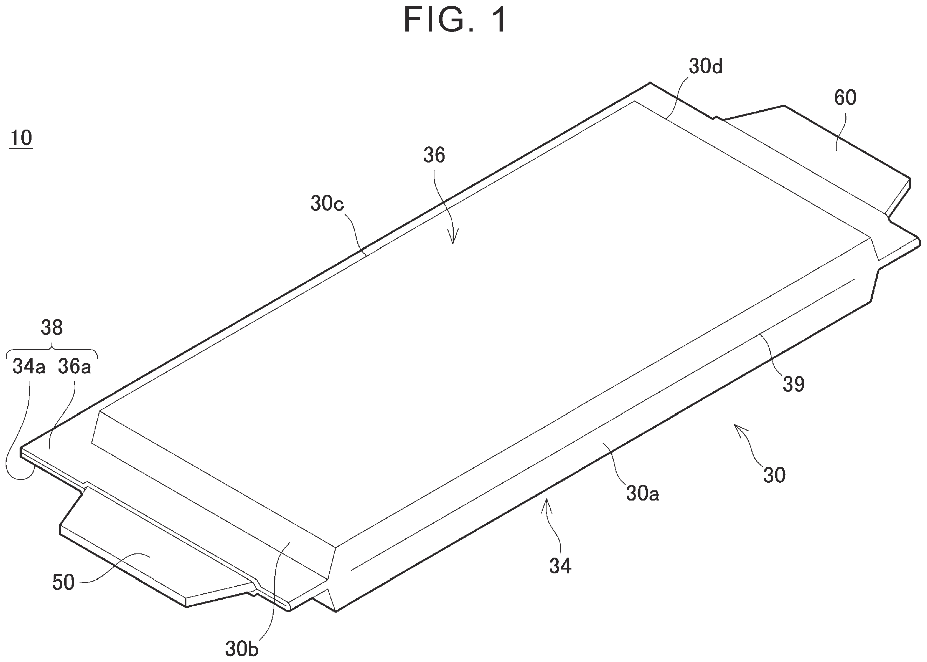

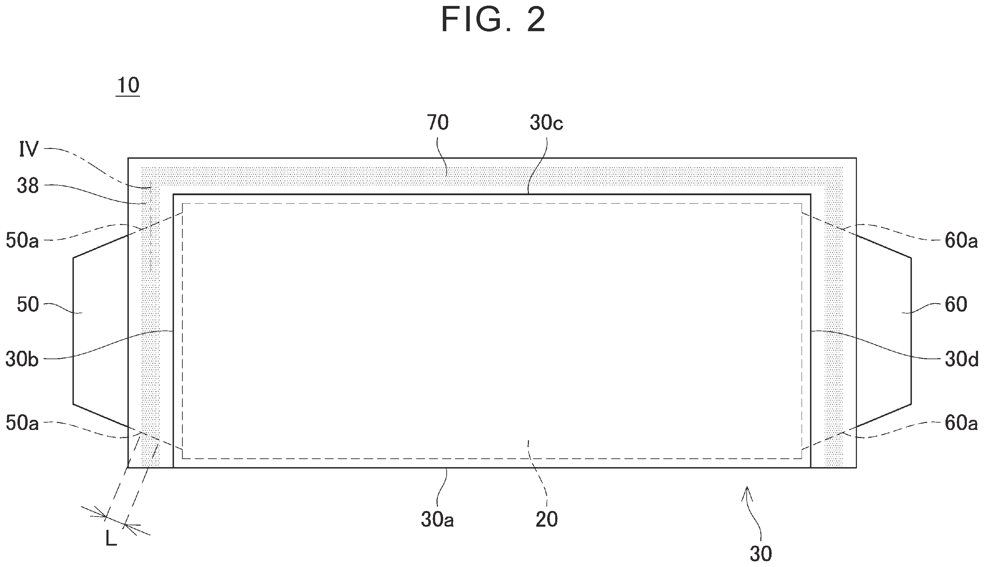

As shown in FIG. 1, a battery cell 10 of an embodiment has a rectangular flat plate shape. When the battery cell 10 is used, a plurality of the battery cells 10 is stacked to form a battery module. As shown in FIG. 2, the battery cell 10 includes an outer case 30 and a power storage element 20 housed inside the outer case 30. Electrode plates 50, 60 are respectively provided at both ends of the battery cell 10 in the longitudinal direction of the battery cell 10. The electrode plate 50 is a positive electrode of the battery cell 10, and the electrode plate 60 is a negative electrode of the battery cell 10.

The power storage element 20 is a chargeable and dischargeable battery element and outputs a direct-current voltage. Although not shown, in the present embodiment, the power storage element 20 is an electrode stack in which a plurality of positive electrode plates and a plurality of negative electrode plates are alternately stacked with separators interposed therebetween. The positive electrode plate and the negative electrode plate are insulated by the separator. The power storage element 20 is immersed in an electrolytic solution filled inside the outer case 30. The electrode plate 50 is connected to a positive electrode current collector portion (that is, a part where a plurality of positive electrode plates is bound together) provided at one end of the power storage element 20. The electrode plate 60 is connected to a negative electrode current collector portion (that is, a part where a plurality of negative electrode plates is bound together) provided at the other end of the power storage element 20.

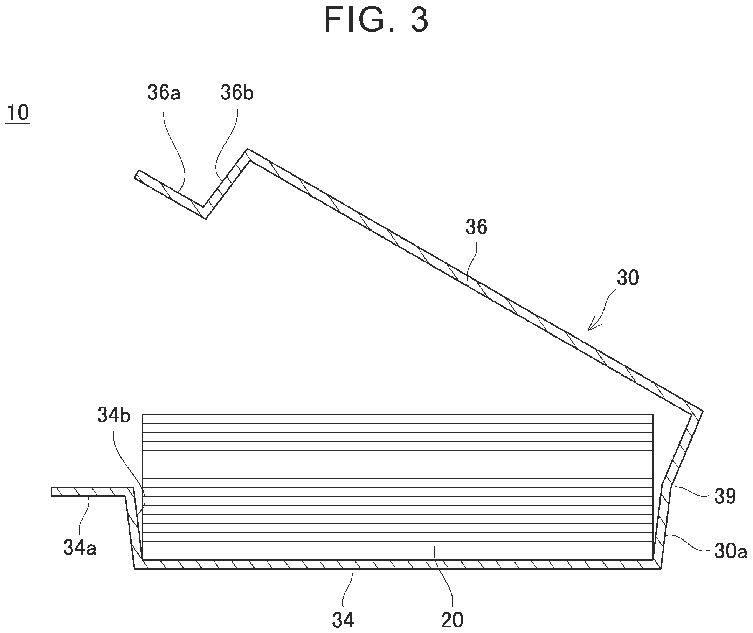

As shown in FIG. 1 and FIG. 2, the outer case 30 has side surfaces 30a, 30b, 30c, 30d. The side surfaces 30a, 30c are the side surfaces extending along the longitudinal direction of the outer case 30. The side surfaces 30b, 30d are the side surfaces extending along the transverse direction of the outer case 30. FIG. 3 is a cross-sectional view of the battery cell 10 before the outer case 30 is sealed. As shown in FIG. 3, the outer case 30 is formed of a thin film. The film forming the outer case 30 is shaped into a container form with a bottom portion 34 and a lid portion 36 through embossing. A crease 39 is provided on the side surface 30a of the outer case 30. The lid portion 36 is swingable relative to the bottom portion 34 around the crease 39. The bottom portion 34 has a frame part 34a and a cup part 34b. The cup part 34b has a cup shape with a recess on the upper surface. The frame part 34a is a flat part provided around the cup part 34b. As shown in FIG. 1, the frame part 34a is provided around the cup part 34b, except for the side surface 30a. As shown in FIG. 3, the power storage element 20 is disposed in the cup part 34b. The lid portion 36 has a frame part 36a and a cap part 36b. The cap part 36b has a cap shape with a recess on the lower surface. The frame part 36a is a flat part provided around the cap part 36b. As shown in FIG. 1, the frame part 36a is provided around the cap part 36b, except for the side surface 30a. When the lid portion 36 is closed, the cap part 36b covers the upper part of the power storage element 20. When the lid portion 36 is closed, the frame part 36a is stacked on top of the frame part 34a, as shown in FIG. 1. Hereinafter, a portion where the frame part 36a and the frame part 34a overlap each other is referred to as a stacked portion 38. As shown in FIG. 1 and FIG. 2, the stacked portion 38 protrudes from the side surfaces 30b, 30c, 30d.

As shown in FIG. 1 and FIG. 2, the electrode plate 50 extends from the power storage element 20 to the outside of the outer case 30. The electrode plate 50 extends from the inner side of the outer case 30 to the outer side of the outer case 30 through the interface between the frame part 36a and the frame part 34a. As shown in FIG. 2, when viewed along the stacking direction of the stacked portion 38, the electrode plate 50 has a trapezoidal shape of which the width decreases from the inner side of the outer case 30 toward the outer side of the outer case 30. Therefore, the width of the electrode plate 50 on the outer side of the outer case 30 is narrower than the width of the electrode plate 50 on the inner side of the outer case 30.

As shown in FIG. 1 and FIG. 2, the electrode plate 60 extends from the power storage element 20 to the outer side of the outer case 30. The electrode plate 60 extends from the inner side of the outer case 30 to the outer side of the outer case 30 through the interface between the frame part 36a and the frame part 34a. As shown in FIG. 2, when viewed along the stacking direction of the stacked portion 38, the electrode plate 60 has a trapezoidal shape of which the width decreases from the inner side of the outer case 30 toward the outer side of the outer case 30. Therefore, the width of the electrode plate 60 on the outer side of the outer case 30 is narrower than the width of the electrode plate 60 on the inner side of the outer case 30.

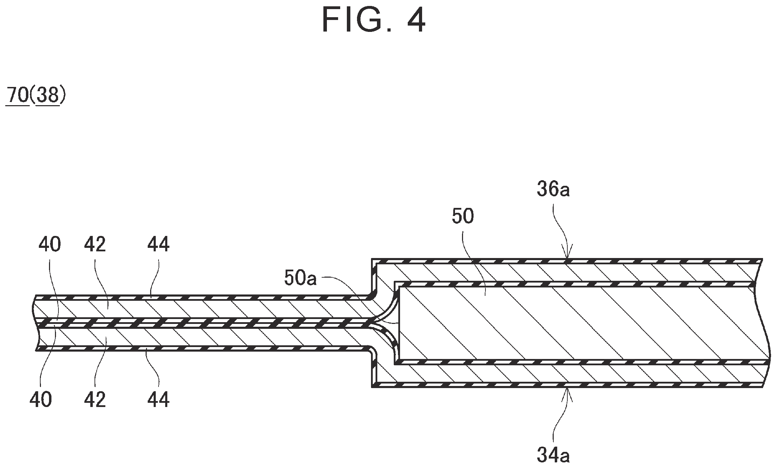

FIG. 4 shows the cross section of the stacked portion 38. FIG. 4 shows the cross section of the boundary between the region where the electrode plate 50 is present and the region where the electrode plate 50 is absent. As described above, the outer case 30 is formed of a film. As shown in FIG. 4, the film forming the outer case 30 is a laminated film in which a resin film 40, an aluminum film 42, and a resin film 44 are laminated together. In other words, each of the frame parts 34a, 36a is formed of a laminated film. The resin film 40 covers one surface of the aluminum film 42, and the resin film 44 covers the other surface of the aluminum film 42.

The region dot-hatched in FIG. 2 is a fused portion 70. The fused portion 70 is provided in the stacked portion 38. The fused portion 70 is a region in which the frame part 34a is connected to the frame part 36a by thermal fusion. As shown in FIG. 2, when viewed along the stacking direction of the stacked portion 38, the fused portion 70 extends along the outer periphery of the stacked portion 38. When viewed along the stacking direction of the stacked portion 38, the fused portion 70 extends linearly across the electrode plates 50, 60. Since the outer case 30 is sealed at the fused portion 70, leakage of the electrolytic solution in the outer case 30 is suppressed.

As shown in FIG. 4, in the region where the electrode plate 50 is absent in the fused portion 70, the resin film 40 of the frame part 34a is fused to the resin film 40 of the frame part 36a. In the region where the electrode plate 50 is present in the fused portion 70, the resin film 40 of the frame part 34a is fused to the lower surface of the electrode plate 50, and the resin film 40 of the frame part 36a is fused to the upper surface of the electrode plate 50.

As shown in FIG. 4, at the outer peripheral edge 50a of the electrode plate 50, the laminated films of the frame parts 34a, 36a are displaced in the thickness direction of the electrode plate 50 while being bent. As a result, the adhesion of the laminated film to the outer peripheral edge 50a (that is, the side surface) tends to decrease. For example, when the resin film 40 deteriorates over time, a small gap may occur between the outer peripheral edge 50a and the laminated film, as shown in FIG. 4. On the other hand, as shown in FIG. 2, the electrode plate 50 has a trapezoidal shape. For this reason, the outer peripheral edge 50a of the electrode plate 50 obliquely intersects the linear fused portion 70. Therefore, in the present embodiment, the distance L of the outer peripheral edge 50a in the fused portion 70 is longer compared to when the outer peripheral edge 50a perpendicularly intersects the fused portion 70. As a result, even when the adhesion of the laminated film decreases in part of the outer peripheral edge 50a, it is still possible to ensure high sealing performance at the outer peripheral edge 50a, so leakage of the electrolytic solution at the outer peripheral edge 50a can be suppressed. Similarly to the outer peripheral edge 50a of the electrode plate 50, the outer peripheral edge 60a of the electrode plate 60 also obliquely intersects the fused portion 70. Therefore, leakage of the electrolytic solution at the outer peripheral edge 60a of the electrode plate 60 can also be suppressed.

In the present embodiment, the width of the electrode plate 50 on the outer side of the outer case 30 is shorter than the width of the electrode plate 50 on the inner side of the outer case 30, and the width of the electrode plate 60 on the outer side of the outer case 30 is shorter than the width of the electrode plate 60 on the inner side of the outer case 30. Therefore, the size of the battery cell 10 is small when viewed along the thickness direction. Therefore, when a battery module is formed using the battery cell 10, it is possible to efficiently arrange the battery cell 10 and other members. As a result, the battery module can be reduced in size, so the battery module can store electric power with a high energy density.

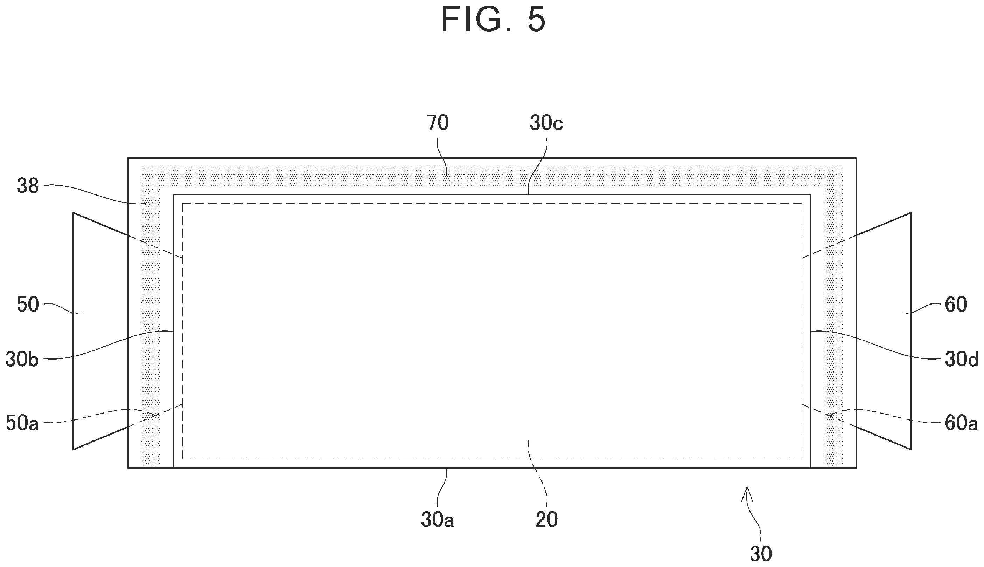

In the embodiment described above, the width of the electrode plate 50 on the outer side of the outer case 30 is shorter than the width of the electrode plate 50 on the inner side of the outer case 30, and the width of the electrode plate 60 on the outer side of the outer case 30 is shorter than the width of the electrode plate 60 on the inner side of the outer case 30. Alternatively, as shown in FIG. 5, the width of the electrode plate 50 on the outer side of the outer case 30 may be longer than the width of the electrode plate 50 on the inner side of the outer case 30, and the width of the electrode plate 60 on the outer side of the outer case 30 may be longer than the width of the electrode plate 60 on the inner side of the outer case 30. With this configuration as well, the outer peripheral edges 50a, 60a of the electrode plates 50, 60 obliquely intersect the linear fused portion 70, so leakage of the electrolytic solution at the outer peripheral edges 50a, 60a can be suppressed.

The frame part 34a of the embodiment is an example of the first film portion. The frame part 36a of the embodiment is an example of the second film portion.

The embodiments have been described in detail above; however, these are only illustrative and are not intended to limit the appended claims. The technology described in the appended claims also encompasses various modifications and changes from the specific examples illustrated above. The technical elements described in the specification or the drawings exhibit technical usability solely or in various combinations and are not limited to combinations of the appended claims at the time of filing the application. The technology illustrated in the specification or the drawings can achieve multiple purposes at the same time and has technical usability by achieving one of those purposes.

## Claims

1. A battery cell (10) comprising:
a power storage element (20);
an outer case (30) housing the power storage element (20), the outer case (30) having a first film portion (34a) and a second film portion (36a) stacked on the first film portion (34a); and
an electrode plate (50; 60) connected to the power storage element (20), the electrode plate (50; 60) extending from an inner side of the outer case (30) to an outer side of the outer case (30) through an interface between the first film portion (34a) and the second film portion (36a), wherein
a fused portion (70) having a linear shape and crossing the electrode plate (50; 60) is provided in a stacked portion (38) of the first film portion (34a) and the second film portion (36a);
the first film portion (34a) and the second film portion (36a) are fused to the electrode plate (50; 60) at the fused portion (70) in a region in which the fused portion (70) overlaps the electrode plate (50; 60);
the first film portion (34a) and the second film portion (36a) are fused to each other at the fused portion (70) in a region in which the fused portion (70) does not overlap the electrode plate (50; 60); and
an outer peripheral edge (50a; 60a) of the electrode plate (50; 60) obliquely intersects the fused portion (70) when viewed along a stacking direction of the first film portion (34a) and the second film portion (36a).

2. The battery cell (10) according to claim 1, wherein a width of the electrode plate (50; 60) on the outer side of the outer case (30) is shorter than a width of the electrode plate (50; 60) on the inner side of the outer case (30).

3. The battery cell (10) according to claim 1, wherein a width of the electrode plate (50; 60) on the outer side of the outer case (30) is longer than a width of the electrode plate (50; 60) on the inner side of the outer case (30).
